# EUROPEAN PATENT APPLICATION

(11) **EP 4 491 073 A1**
(43) Date of publication of application: **15.01.2025**
(21) Application number: 23825360.3
(22) Date of filing: 11.08.2023
(51) Int. Cl.: A47J 37/06

(54) **COOKING DEVICE AND CONTROL METHOD AND APPARATUS THEREFOR, AND COMPUTER-READABLE STORAGE MEDIUM**

(30) Priority: 31.05.2023 CN 202310644790
(71) Applicant: Guangdong Midea Kitchen Appliances Manufacturing Co., Ltd., Beijiao, Shunde Foshan Guangdong 528311 (CN)
(72) Inventor: ZHANG, Peiyao, Foshan, Guangdong 528311 (CN); LIU, Tianyi, Foshan, Guangdong 528311 (CN); LU, Xu, Foshan, Guangdong 528311 (CN); SHEN, Guoyang, Foshan, Guangdong 528311 (CN); ZHANG, Xiaohua, Foshan, Guangdong 528311 (CN); YUAN, Shuangxia, Foshan, Guangdong 528311 (CN); CHEN, Xiaojiang, Foshan, Guangdong 528311 (CN)
(74) Representative: RGTH
(86) International application number: PCT/CN2023/112476
(87) International publication number: WO 2024/244168

(57) **Abstract**

Provided are a cooking device, a control method and apparatus thereof, and a computer-readable storage medium. The cooking device includes a microwave module and an air frying module. The control method for the cooking device includes: obtaining a characteristic parameter of a food material and a cooking stage of the cooking device; determining a cooking parameter of the cooking device according to the characteristic parameter of the food material; and controlling at least one of the microwave module and the air frying module according to the cooking parameter and the cooking stage.

## Description

### CROSS-REFERENCE TO RELATED APPLICATIONS

This application claims priority to Chinese Patent Application No. 202310644790.6, entitled "COOKING DEVICE, CONTROL METHOD AND APPARATUS THEREOF, AND COMPUTER-READABLE STORAGE MEDIUM" and filed on May 31, 2023, the entire contents of which are incorporated herein by reference.

### FIELD

The present disclosure relates to the field of cooking control technologies, and particularly, to a cooking device, a control method and apparatus thereof, and a computer-readable storage medium.

### BACKGROUND

Frying cooking, in which food needs to be submerged in high-temperature liquid oil for deep frying, increases fat intake, causing obesity and even harming health.

Compared with traditional frying, air frying, a novel cooking method, may prevent the food from being soaked in oil during cooking to reduce the fat intake. Meanwhile, a cooking effect similar to frying can be achieved. However, at present, cooking meat and frozen ready-made foods by air frying requires a long cooking time, resulting in a great loss of nutritional elements.

### SUMMARY

The present disclosure aims to solve at least one of the technical problems in the related art to some extent. To this end, a first objective of the present disclosure is to provide a control method for a cooking device. In this way, it can be ensured that most nutrient substances in meat and frozen ready-made foods are preserved while achieving an optimal cooking effect. Moreover, a cooking time is effectively shortened.

A second objective of the present disclosure is to provide a computer-readable storage medium.

A third objective of the present disclosure is to provide a cooking device.

A fourth objective of the present disclosure is to provide a control apparatus for a cooking device.

To achieve the above objectives, embodiments of a first aspect of the present disclosure provide a control method for a cooking device. The cooking device comprises a microwave module and an air frying module. The method comprises: obtaining a characteristic parameter of a food material and a cooking stage of the cooking device; determining a cooking parameter of the cooking device according to the characteristic parameter of the food material; and controlling at least either the microwave module or the air frying module according to the cooking parameter and the cooking stage, to improve a cooking speed of the food material.

According to the control method for the cooking device provided by the embodiments of the present disclosure, the at least either the microwave module or the air frying module is controlled according to the cooking parameter and the cooking stage. Therefore, it can be ensured that most nutrient substances in meat and frozen ready-made foods are preserved while achieving the optimal cooking effect. Moreover, the cooking time is effectively shortened.

In addition, the control method for the cooking device according to the above embodiments of the present disclosure may further have the following additional technical features.

According to an embodiment of the present disclosure, the characteristic parameter of the food material comprises a type and a weight of the food material, the cooking parameter comprises a predetermined cooking temperature, total cooking time, and total cooking power, and the cooking stage comprises a preheating stage, a slow temperature increasing stage, a rapid temperature increasing stage, a steady heating stage, and a crusting and coloring stage.

According to an embodiment of the present disclosure, said controlling at least either the microwave module or the air frying module according to the cooking parameter and the cooking stage comprises: determining that a cooking temperature at the preheating stage is the predetermined cooking temperature in response to the cooking stage being the preheating stage; and controlling the air frying module to preheat the cooking device, such that a cavity temperature of the cooking device reaches the predetermined cooking temperature.

According to an embodiment of the present disclosure, said controlling at least either the microwave module or the air frying module according to the cooking parameter and the cooking stage comprises: determining that a cooking temperature at the slow temperature increasing stage is a first cooking temperature in response to the cooking stage being the slow temperature increasing stage, the first cooking temperature being smaller than or equal to the predetermined cooking temperature; allocating first microwave heating power and first air frying heating power to the microwave module and the air frying module according to the total cooking power; and controlling the microwave module and the air frying module to continuously operate for first cooking time according to the first microwave power and the first air frying power, respectively, to maintain a cavity temperature of the cooking device at the first cooking temperature. The first cooking time is in a range of [10%t, 20%t], where t is the total cooking time.

According to an embodiment of the present disclosure, said controlling at least either the microwave module or the air frying module according to the cooking parameter and the cooking stage comprises: determining that a cooking temperature at the rapid temperature increasing stage is a second cooking temperature in response to the cooking stage being the rapid temperature increasing stage, the second cooking temperature being greater than or equal to the predetermined cooking temperature and smaller than or equal to a sum of the predetermined cooking temperature and a first temperature threshold; allocating second microwave heating power and second air frying heating power to the microwave module and the air frying module according to the total cooking power; and controlling the microwave module and the air frying module to continuously operate for second cooking time according to the second microwave power and the second air frying power, respectively, to maintain a cavity temperature of the cooking device at the second cooking temperature. The second cooking time is in a range of [15%t, 25%t], where t is the total cooking time.

According to an embodiment of the present disclosure, said controlling at least either the microwave module or the air frying module according to the cooking parameter and the cooking stage comprises: determining that a cooking temperature at the steady heating stage is a third cooking temperature in response to the cooking stage being the steady heating stage, the third cooking temperature being greater than or equal to the predetermined cooking temperature and smaller than or equal to a sum of the predetermined cooking temperature and a second temperature threshold; allocating third microwave heating power and third air frying heating power to the microwave module and the air frying module according to the total cooking power; and controlling the microwave module and the air frying module to continuously operate for third cooking time according to the third microwave power and the third air frying power, respectively, to maintain a cavity temperature of the cooking device at the third cooking temperature. The third cooking time is in a range of [25%t, 40%t], where t is the total cooking time.

According to an embodiment of the present disclosure, said controlling at least either the microwave module or the air frying module according to the cooking parameter and the cooking stage comprises: determining that a cooking temperature at the crusting and coloring stage is a fourth cooking temperature in response to the cooking stage being the crusting and coloring stage, the fourth cooking temperature being greater than or equal to the predetermined cooking temperature and smaller than or equal to a sum of the predetermined cooking temperature and a third temperature threshold; allocating fourth microwave heating power and fourth air frying heating power to the microwave module and the air frying module according to the total cooking power; and controlling the microwave module and the air frying module to continuously operate for fourth cooking time according to the fourth microwave power and the fourth air frying power, respectively, to maintain a cavity temperature of the cooking device at the fourth cooking temperature. The fourth cooking time is in a range of [30%t, 50%t], where t is the total cooking time.

According to an embodiment of the present disclosure, the predetermined cooking temperature and the total cooking power are each determined based on the type of the food material, the predetermined cooking temperature is in a range of [140°C, 250°C], and the total cooking power is in a range of [1200W, 1800W]; and the total cooking time is determined based on the weight of the food material, and the total cooking time is in a range of [15min, 40min].

To achieve the above objectives, embodiments of a second aspect of the present disclosure provide a computer-readable storage medium, which has a control program for a cooking device stored thereon. The control program for the cooking device, when executed by a processor, implements the control method for the cooking device described above.

According to the computer-readable storage medium provided by the embodiments of the present disclosure, the processor executes the control program for the cooking device stored thereon. Therefore, it can be ensured that most nutrient substances in meat and frozen ready-made foods are preserved while achieving the optimal cooking effect. Moreover, the cooking time is effectively shortened.

To achieve the above objectives, embodiments of a third aspect of the present disclosure provide a cooking device. The cooking device comprises a memory, a processor, and a control program for the cooking device stored on the memory and executable on the processor. The processor, when executing the control program, implements the control method for the cooking device described above.

With the cooking device according to the embodiments of the present disclosure, the processor executes the control program for the cooking device stored on the memory. Therefore, it can be ensured that most nutrient substances in meat and frozen ready-made foods are preserved while achieving the optimal cooking effect. Moreover, the cooking time is effectively shortened.

To achieve the above objectives, embodiments of a fourth aspect of the present disclosure provide a control apparatus for a cooking device. The cooking device comprises a microwave module and an air frying module. The apparatus comprises: an obtaining module configured to obtain a characteristic parameter of a food material and a cooking stage of the cooking device; a determining module configured to determine a cooking parameter of the cooking device according to the characteristic parameter of the food material; and a control module configured to control at least either the microwave module or the air frying module according to the cooking parameter and the cooking stage, to improve a cooking speed of the food material.

According to the control apparatus for the cooking device provided by the embodiments of the present disclosure, the at least either the microwave module or the air frying module are controlled by the control module according to the cooking parameter and the cooking stage. Therefore, it can be ensured that most nutrient substances in meat and frozen ready-made foods are preserved while achieving the optimal cooking effect. Moreover, the cooking time is effectively shortened.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is a block diagram of a cooking device according to an embodiment of the present disclosure.
FIG. 2 is a schematic flowchart of a control method for a cooking device according to an embodiment of the present disclosure.
FIG. 3 is a schematic flowchart of a control method for a cooking device according to an embodiment of the present disclosure.
FIG. 4 is a schematic flowchart of a control method for a cooking device according to an embodiment of the present disclosure.
FIG. 5 is a schematic flowchart of a control method for a cooking device according to an embodiment of the present disclosure.
FIG. 6 is a schematic flowchart of a control method for a cooking device according to an embodiment of the present disclosure.
FIG. 7 is a schematic flowchart of a control method for a cooking device according to an embodiment of the present disclosure.
FIG. 8 is a schematic flowchart of a control method for a cooking device according to a specific embodiment of the present disclosure.
FIG. 9 is a schematic diagram of a curve of a temperature at a cooking stage changing over time according to a specific embodiment of the present disclosure.
FIG. 10 is a block diagram of a cooking device according to another embodiment of the present disclosure.
FIG. 11 is a block diagram of a control apparatus for a cooking device according to an embodiment of the present disclosure.

### DETAILED DESCRIPTION OF THE EMBODIMENTS

The embodiments of the present disclosure will be described in detail below, examples thereof are illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

A control method for a cooking device, a computer-readable storage medium, a cooking device, and a control apparatus for a cooking device in the embodiments of the present disclosure are described below with reference to the accompanying drawings.

Before introducing the control method for the cooking device and the control apparatus for the cooking device of the embodiments of the present disclosure, a specific structure of the cooking device is correspondingly described.

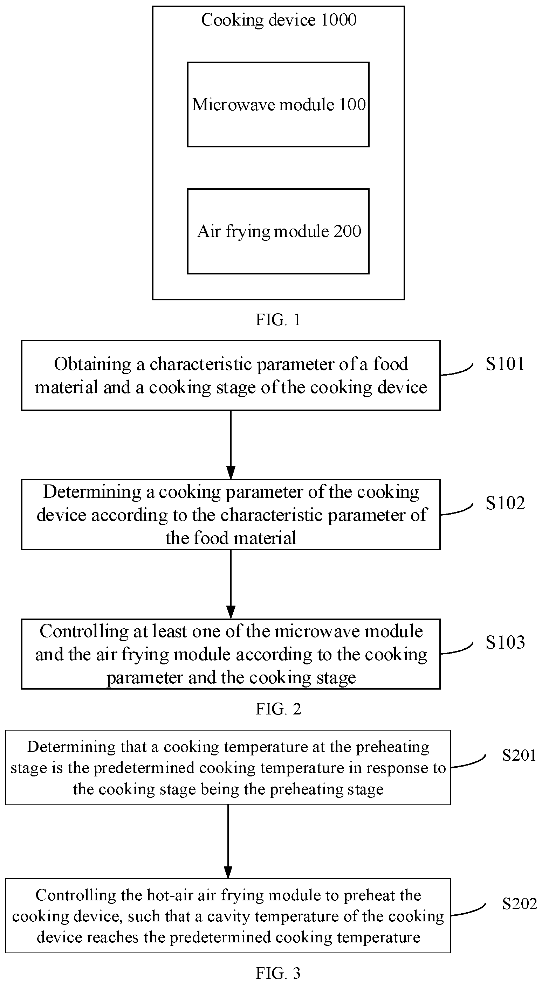

In an exemplary embodiment of the present disclosure, as illustrated in FIG. 1, a cooking device 1000 comprises a microwave module 100 and an air frying module 200.

FIG. 2 is a schematic flowchart of a control method for a cooking device according to an embodiment of the present disclosure.

In some embodiments of the present disclosure, as illustrated in FIG. 2, the control method for the cooking device comprises the following operations at blocks.

At block S101, a characteristic parameter of a food material and a cooking stage of the cooking device are obtained.

In the embodiment, the characteristic parameter of the food material comprises a type and a weight of the food material. The type and the weight of the food material can be obtained by providing an intelligent sensor or be manually obtained by a user. In addition, the characteristic parameter of the food material and a manner of obtaining the characteristic parameter of the food material may be not specifically defined in the present disclosure. The cooking stage comprises a preheating stage, a steady heating stage, a continuous heating stage, and a crusting and coloring stage. In the embodiment, a cooking stage of the cooking device for obtaining may be one of the preheating stage, the steady heating stage, the continuous heating stage, and the crusting and coloring stage.

At block S102, a cooking parameter of the cooking device is determined according to the characteristic parameter of the food material.

In the embodiment, the characteristic parameter of the food material comprises the type and the weight of the food material. The cooking parameter of the cooking device comprises a predetermined cooking temperature, cooking power, and total cooking time. The predetermined cooking temperature and the cooking power may be determined according to the type of the food material. The total cooking time is determined according to the weight of the food material.

It should be noted that the predetermined cooking temperature may be preferably in a range of [140°C, 250°C]. The total cooking time may be preferably in a range of [15min, 40min]. In addition, the present disclosure may not specifically define the value range of the predetermined cooking temperature and the value range of the total cooking time.

At block S103, at least either the microwave module or the air frying module is controlled according to the cooking parameter and the cooking stage.

In the embodiment, the at least either the microwave module or the air frying module is controlled according to the predetermined cooking temperature, the cooking power, and the total cooking time in the cooking parameter, and the preheating stage, the steady heating stage, the continuous heating stage, and the crusting and coloring stage in the cooking stage. When the cooking stage is the preheating stage, the air frying module is controlled. When the cooking stage is the slow temperature increasing stage, the microwave module and the air frying module are controlled. When the cooking stage is the rapid temperature increasing stage, the microwave module and the air frying module are controlled. When the cooking stage is the steady heating stage, the microwave module and the air frying module are controlled. When the cooking stage is the crusting and coloring stage, the microwave module and the air frying module are controlled.

Further, in some embodiments of the present disclosure, as illustrated in FIG. 3, the controlling at least either the microwave module or the air frying module according to the cooking parameter and the cooking stage comprises the following operations at blocks.

At block S201, a cooking temperature at the preheating stage is determined to be the predetermined cooking temperature in response to the cooking stage being the preheating stage.

In the embodiment, when the cooking stage is the preheating stage, the cooking temperature at the preheating stage is determined to be a predetermined cooking temperature T_0 according to the type of the food material, and the predetermined cooking temperature may be preferably in a range of [150°C, 250°C]. When the type of the food material is potato chips, the predetermined cooking temperature T_0 may be preferably 210°C. In addition, the present disclosure may not specifically define the predetermined cooking temperature T_0 when the type of the food material is the potato chips.

At block S202, the air frying module is controlled to preheat the cooking device, such that a cavity temperature of the cooking device reaches the predetermined cooking temperature.

In the embodiment, operation of the air frying module may be performed by integrally providing and operating a fan at a back of the cooking device and a heating tube at the back of the cooking device together. Further, the cooking device is preheated by controlling the air frying module, such that the cavity temperature of the cooking device reaches the predetermined cooking temperature T_0. Moreover, the cavity temperature of the cooking device is obtained by providing a temperature sensor in the cooking device. In addition, the present disclosure may not specifically define a method for obtaining the cavity temperature of the cooking device.

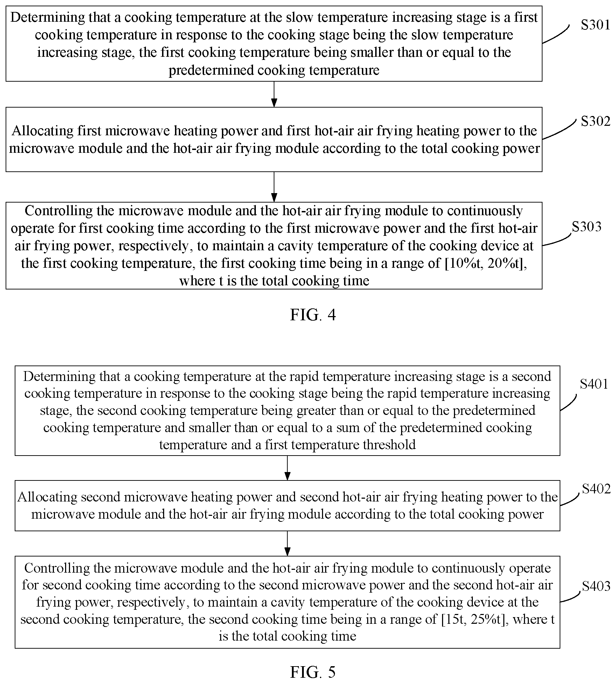

Further, in some embodiments of the present disclosure, as illustrated in FIG. 4, the controlling at least either the microwave module or the air frying module according to the cooking parameter and the cooking stage comprises the following operations at blocks.

At block S301, a cooking temperature at the slow temperature increasing stage is determined to be a first cooking temperature in response to the cooking stage being the slow temperature increasing stage. The first cooking temperature is smaller than or equal to the predetermined cooking temperature.

In the embodiment, when the cooking stage is the slow temperature increasing stage, the cooking temperature at the slow temperature increasing stage is a first cooking temperature T_1. The first cooking temperature T_1 may be set by the user. The first cooking temperature T_1 is smaller than or equal to the predetermined cooking temperature T_0. When the type of the food material is the potato chips, and when the weight of the food material is 454g, the predetermined cooking temperature T_0 may be preferably 210°C, and the first cooking temperature T_1 may be preferably 100°C. In addition, the present disclosure may not specifically define a value of the first cooking temperature T_1 within its value range.

At block S302, first microwave heating power and first air frying heating power are allocated to the microwave module and the air frying module according to the total cooking power.

In the embodiment, the total cooking power is in a range of [1200W, 1800W]. First microwave heating power P1 of the microwave module is in a range of [600W, 800W]. First air frying heating power P2 of the air frying module is in a range of [600W, 1000W]. The type of the food material is the potato chips, the weight of the food material is 454g, and the total cooking power is 1800W. In this case, the first microwave heating power P1 may be preferably 800W, and the first air frying heating power P2 may be preferably 1000W. In addition, the present disclosure may not specifically define a value of the first microwave heating power P1 and a value of the first air frying heating power P2 within their value ranges.

At block S303, the microwave module and the air frying module are controlled to continuously operate for first cooking time according to the first microwave power and the first air frying power, respectively, to maintain a cavity temperature of the cooking device at the first cooking temperature. The first cooking time being in a range of [10%t, 20%t], where t is the total cooking time.

In the embodiment, the first cooking time is in a range of [10%t, 20%t], where t is the total cooking time. The type of the food material is the potato chips, the weight of the food material is 454g, and the total cooking power is 1800W. In this case, the predetermined cooking temperature T_0 may be preferably 210°C, and the total cooking time t may be preferably 18min. Further, the first cooking time t_1 may be determined to be in a range of [1.8min, 3.6min]. The first cooking time t_1 in the embodiment may be preferably 2min. In addition, the present disclosure may not specifically define a value of the first cooking time t_1 within its value range. The first microwave heating power P1 may be preferably 800W, and the first air frying heating power P2 may be preferably 1000W. The first cooking temperature T_1 may be preferably 100°C. The microwave module and the air frying module are controlled to continuously operate for the first cooking time t_1 based on the selected first microwave heating power P1 and the first air frying heating power P2, respectively, to maintain the cavity temperature of the cooking device at the first cooking temperature T_1.

Further, in some embodiments of the present disclosure, as illustrated in FIG. 5, the controlling at least either the microwave module or the air frying module according to the cooking parameter and the cooking stage comprises the following operations at blocks.

At block S401, a cooking temperature at the rapid temperature increasing stage is determined to be a second cooking temperature in response to the cooking stage being the rapid temperature increasing stage. The second cooking temperature is greater than or equal to the predetermined cooking temperature and smaller than or equal to a sum of the predetermined cooking temperature and a first temperature threshold.

In the embodiment, when the cooking stage is the rapid temperature increasing stage, the cooking temperature at the rapid temperature increasing stage is a second cooking temperature T_2, which may be set by the user. The second cooking temperature T_2 is greater than or equal to the predetermined cooking temperature T_0 and smaller than or equal to the sum of the predetermined cooking temperature T_0 and the first temperature threshold. It should be noted that the first temperature threshold may be preferably 20°C. In addition, the present disclosure may not specifically define a value of the first temperature threshold. When the type of the food material is the potato chips, and the weight of the food material is 454g, the predetermined cooking temperature T_0 may be preferably 210°C. Therefore, it can be obtained that the second cooking temperature T_2 is in a range of [210°C, 230°C]. The second cooking temperature T_2 may be preferably 220°C. In addition, the present disclosure may not specifically define a value of the second cooking temperature T_2 within its value range.

At block S402, second microwave heating power and second air frying heating power are allocated to the microwave module and the air frying module according to the total cooking power.

In the embodiment, the total cooking power is in a range of [1200W, 1800W]. Second microwave heating power P3 of the microwave module is in a range of [200W, 400W]. Second air frying heating power P4 of the air frying module is in a range of [1000W, 1400W]. The type of the food material is the potato chips, the weight of the food material is 454g, and the total cooking power is 1800W. In this case, the second microwave heating power P3 may be preferably 400W, and the second air frying heating power P4 may be preferably 1400W. In addition, the present disclosure may not specifically define a value of the second microwave heating power P3 and a value of the second air frying heating power P4 within their value ranges.

At block S403, the microwave module and the air frying module are controlled to continuously operate for second cooking time according to the second microwave power and the second air frying power, respectively, to maintain a cavity temperature of the cooking device at the second cooking temperature. The second cooking time is in a range of [15%t, 25%t], where t is the total cooking time.

In the embodiment, second cooking time t_2 is in a range of [15%t, 25%t], where t is the total cooking time. When the type of the food material is the potato chips, the weight of the food material is 454g, and the total cooking power is 1800W, the predetermined cooking temperature T_0 may be preferably 210°C, and the total cooking time t may be preferably 18min. Further, the second cooking time t_2 may be determined to be in a range of [2.7min, 4.5min]. The second cooking time t_2 in the embodiment may be preferably 4min. In addition, the present disclosure may not specifically define a value of the second cooking time t_2 within its value range. The second microwave heating power P3 may be preferably 400W, and the second air frying heating power P4 may be preferably 1400W. The second cooking temperature T_2 may be preferably 220°C. The microwave module and the air frying module are controlled to continuously operate for the second cooking time t_2 according to the second microwave power P3 and the second air frying power P4, respectively, to maintain the cavity temperature of the cooking device at the second cooking temperature T_2.

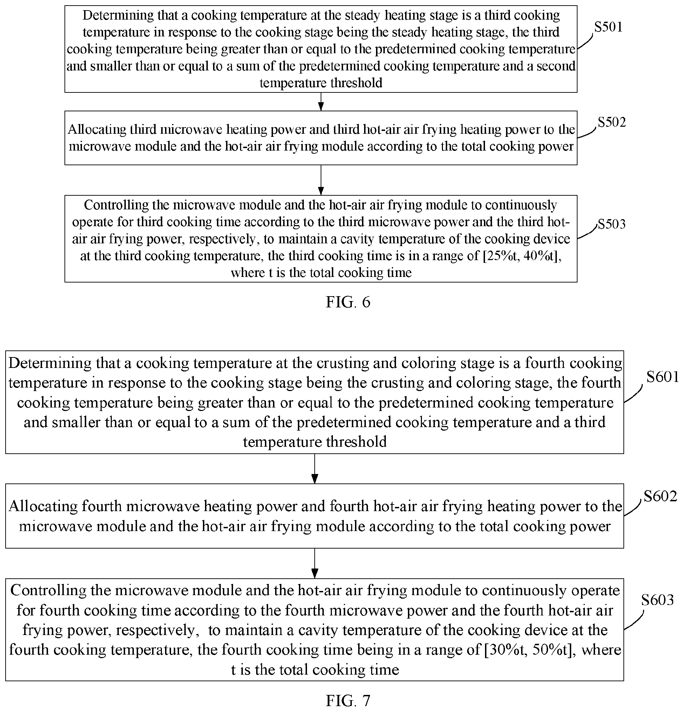

Further, in some embodiments of the present disclosure, as illustrated in FIG. 6, the controlling at least either the microwave module or the air frying module according to the cooking parameter and the cooking stage comprises the following operations at blocks.

At block S501, a cooking temperature at the steady heating stage is determined to be a third cooking temperature in response to the cooking stage being the steady heating stage. The third cooking temperature is greater than or equal to the predetermined cooking temperature and smaller than or equal to a sum of the predetermined cooking temperature and a second temperature threshold.

In the embodiment, when the cooking stage is the steady heating stage, the cooking temperature at the steady heating stage is a third cooking temperature T_3, which may be set by the user. The third cooking temperature T_3 is greater than or equal to the predetermined cooking temperature T_0 and smaller than or equal to the sum of the predetermined cooking temperature T_0 and the second temperature threshold. It should be noted that the second temperature threshold may be preferably 10°C. In addition, the present disclosure may not specifically define a value of the second temperature threshold. When the type of the food material is the potato chips, and the weight of the food material is 454g, the predetermined cooking temperature T_0 may be preferably 210°C. Therefore, it can be obtained that the third cooking temperature T_3 is in a range of [210°C, 220°C]. The third cooking temperature T_3 may be preferably 215°C. In addition, the present disclosure may not specifically define a value of the third cooking temperature T_3 within its value range.

At block S502, third microwave heating power and third air frying heating power are allocated to the microwave module and the air frying module according to the total cooking power.

In the embodiment, the total cooking power is in a range of [1200W, 1800W]. Third microwave heating power P5 of the microwave module is in a range of [800W, 1000W]. Third air frying heating power P6 of the air frying module is in a range of [400W, 800W]. When the type of the food material is the potato chips, the weight of the food material is 454g, and the total cooking power is 1800W, the third microwave heating power P5 may be preferably 1000W, and the third air frying heating power P6 may be preferably 800W. In addition, the present disclosure may not specifically define a value of the third microwave heating power P5 and a value of the third air frying heating power P6 within their value ranges.

At block S503, the microwave module and the air frying module are controlled to continuously operate for third cooking time according to the third microwave power and the third air frying power, respectively, to maintain a cavity temperature of the cooking device at the third cooking temperature. The third cooking time is in a range of [25%t, 40%t], where t is the total cooking time.

In the embodiment, third cooking time t_3 is in a range of [25%t, 40%t], where t is the total cooking time. When the type of the food material is the potato chips, the weight of the food material is 454g, and the total cooking power is 1800W, the predetermined cooking temperature T_0 may be preferably 210°C, and the total cooking time t may be preferably 18min. Further, the third cooking time t_3 may be determined to be in a range of [4.5min, 7.2min]. The third cooking time t_3 in the embodiment may be preferably 5min. In addition, the present disclosure may not specifically define a value of the third cooking time t_3 within its value range. The third microwave heating power P5 may be preferably 1000W, and the third air frying heating power P6 may be preferably 800W. The third cooking temperature T_3 may be preferably 215°C. Then, the microwave module and the air frying module are controlled to continuously operate for third cooking time t_3 according to the third microwave heating power P5 and the third air frying heating power P6, respectively, to maintain the cavity temperature of the cooking device at the third cooking temperature T_3.

Further, in some embodiments of the present disclosure, as illustrated in FIG. 7, the controlling at least either the microwave module or the air frying module according to the cooking parameter and the cooking stage comprises the following operations at blocks.

At block S601, a cooking temperature at the crusting and coloring stage is determined to be a fourth cooking temperature in response to the cooking stage being the crusting and coloring stage. The fourth cooking temperature is greater than or equal to the predetermined cooking temperature and smaller than or equal to a sum of the predetermined cooking temperature and a third temperature threshold.

In the embodiment, when the cooking stage is the crusting and coloring stage, the cooking temperature at the crusting and coloring stage is a fourth cooking temperature T_4, which may be set by the user. The fourth cooking temperature T_4 is greater than or equal to the predetermined cooking temperature T_0 and smaller than or equal to the sum of the predetermined cooking temperature T_0 and the third temperature threshold. It should be noted that the third temperature threshold may be preferably 20°C. In addition, the present disclosure may not specifically define a value of the third temperature threshold. When the type of the food material is the potato chips, and the weight of the food material is 454g, the predetermined cooking temperature T_0 may be preferably 210°C. Therefore, it can be obtained that the fourth cooking temperature T_4 is in a range of [210°C, 230°C]. The fourth cooking temperature T_4 may be preferably 230°C. In addition, the present disclosure may not specifically define a value of the fourth cooking temperature T_4 within its value range.

At block S602, fourth microwave heating power and fourth air frying heating power are allocated to the microwave module and the air frying module according to the total cooking power.

In the embodiment, the total cooking power is in a range of [1200W, 1800W]. Fourth microwave heating power P7 of the microwave module is in a range of [100W, 200W]. Fourth air frying heating power P8 of the air frying module is in a range of [1100W, 1600W]. When the type of the food material is the potato chips, the weight of the food material is 454g, and the total cooking power is 1800W, the fourth microwave heating power P7 may be preferably 200W, and the fourth air frying heating power P8 may be preferably 1600W. In addition, the present disclosure may not specifically define a value of the fourth microwave heating power P7 and a value of the fourth air frying heating power P8 within their value ranges.

At block S603, the microwave module and the air frying module are controlled to continuously operate for fourth cooking time according to the fourth microwave power and the fourth air frying power, respectively, to maintain a cavity temperature of the cooking device at the fourth cooking temperature. The fourth cooking time is in a range of [30%t, 50%t], where t is the total cooking time.

In the embodiment, the fourth cooking time t_4 is in a range of [30%t, 50%t], where t is the total cooking time. When the type of the food material is the potato chips, the weight of the food material is 454g, and the total cooking power is 1800W, the predetermined cooking temperature T_0 may be preferably 210°C, and the total cooking time t may be preferably 18min. Further, the fourth cooking time t_4 may be determined to be in a range of [5.4min, 9min]. The fourth cooking time t_4 in the embodiment may be preferably 7min. In addition, the present disclosure may not specifically define a value of the fourth cooking time t_4 within its value range. The fourth microwave heating power P7 may be preferably 200W, and the fourth air frying heating power P8 may be preferably 1600W. The fourth cooking temperature T_4 may be preferably 230°C. The microwave module and the air frying module are controlled to continuously operate for the fourth cooking time t_4 according to the fourth microwave heating power P7 and the fourth air frying heating power P8, respectively, to maintain the cavity temperature of the cooking device at the fourth cooking temperature T_4.

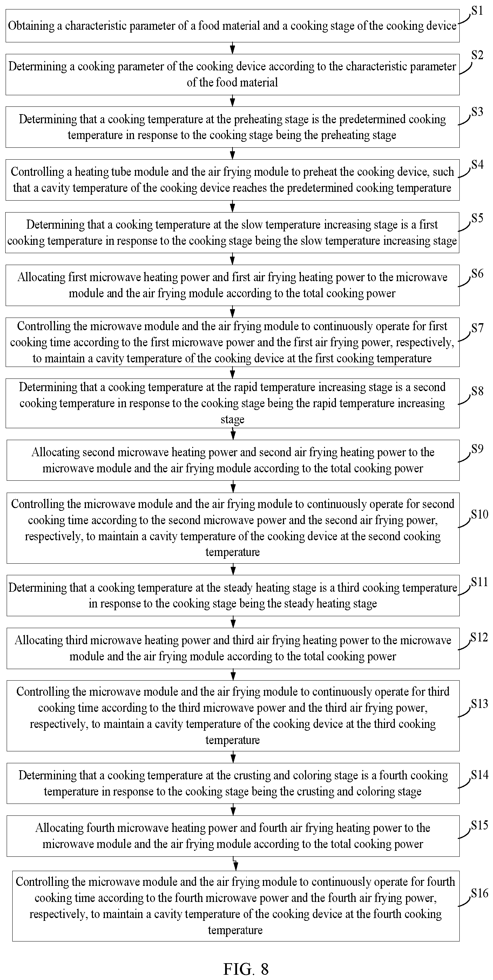

Specific process steps of the control method for the cooking device are described below with reference to FIG. 8 and the specific embodiments of the present disclosure. As illustrated in FIG. 8, the following steps at blocks are performed.

At block S1, a characteristic parameter of a food material and a cooking stage of the cooking device are obtained.

At block S2, a cooking parameter of the cooking device is determined according to the characteristic parameter of the food material.

At block S3, a cooking temperature at the preheating stage is determined to be the predetermined cooking temperature in response to the cooking stage being the preheating stage.

At block S4, the heating tube module and the air frying module are controlled to preheat the cooking device, such that a cavity temperature of the cooking device reaches the predetermined cooking temperature.

At block S5, a cooking temperature at the slow temperature increasing stage is determined to be a first cooking temperature in response to the cooking stage being the slow temperature increasing stage.

At block S6, first microwave heating power and first air frying heating power are allocated to the microwave module and the air frying module according to the total cooking power.

At block S7, the microwave module and the air frying module are controlled to continuously operate for first cooking time according to the first microwave power and the first air frying power, respectively, to maintain a cavity temperature of the cooking device at the first cooking temperature.

At block S8, a cooking temperature at the rapid temperature increasing stage is determined to be a second cooking temperature in response to the cooking stage being the rapid temperature increasing stage.

At block S9, second microwave heating power and second air frying heating power are allocated to the microwave module and the air frying module according to the total cooking power.

At block S10, the microwave module and the air frying module are controlled to continuously operate for second cooking time according to the second microwave power and the second air frying power, respectively, to maintain a cavity temperature of the cooking device at the second cooking temperature.

At block S11, a cooking temperature at the steady heating stage is determined to be a third cooking temperature in response to the cooking stage being the steady heating stage.

At block S12, third microwave heating power and third air frying heating power are allocated to the microwave module and the air frying module according to the total cooking power.

At block S13, the microwave module and the air frying module are controlled to continuously operate for third cooking time according to the third microwave power and the third air frying power, respectively, to maintain a cavity temperature of the cooking device at the third cooking temperature.

At block S14, a cooking temperature at the crusting and coloring stage is determined to be a fourth cooking temperature in response to the cooking stage being the crusting and coloring stage.

At block S15, fourth microwave heating power and fourth air frying heating power are allocated to the microwave module and the air frying module according to the total cooking power.

At block S16, the microwave module and the air frying module are controlled to continuously operate for fourth cooking time according to the fourth microwave power and the fourth air frying power, respectively, to maintain a cavity temperature of the cooking device at the fourth cooking temperature.

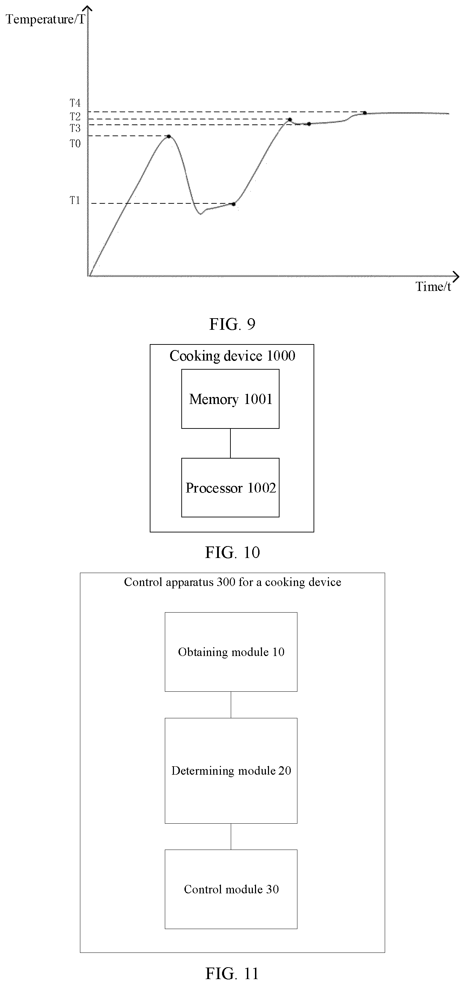

In summary, FIG. 9 illustrates a schematic diagram of a curve of a temperature at a cooking stage changing over time. In response to the type of the food material being the potato chips, the weight of the food material being 454g, and the total cooking power being 1800W, the predetermined temperature T_0 may be preferably 210°C, and the total cooking time t may be preferably 18min. When the cooking stage is the preheating stage, the air frying module is controlled to preheat the cooking device. At this time, the cavity temperature of the cooking device continuously increases until reaches the predetermined cooking temperature of 210°C. Then, a food material that need to be cooked is added.

When the cooking stage is the slow temperature increasing stage, the first cooking time t_1 may be preferably 2min, and the first cooking temperature T_1 may be preferably 100°C. In this way, the microwave module is controlled to operate in the whole process with the first microwave heating power of 800W, and the air frying module coupled to the microwave module is controlled to operate with the first air frying heating power of 1000W. Further, the microwave module and the air frying module are controlled to continuously operate for the first cooking time t_1 through the selected first microwave power P1 and the first air frying power P2, respectively, to maintain the cavity temperature of the cooking device at the first cooking temperature T_1.

When the cooking stage is the rapid temperature increasing stage, the second cooking time t_2 may be preferably 4min, and the second cooking temperature T_2 may be preferably 220°C. In this way, the microwave module is controlled to operate in the whole process with the second microwave heating power of 400W, and the air frying heating module coupled to the microwave module is controlled to operate with the second air frying heating power of 1400W. Further, the microwave module and the air frying module are controlled to continuously operate for the second cooking time t_2 through the selected second microwave power P3 and the second air frying power P4, respectively, to maintain the cavity temperature of the cooking device at the second cooking temperature T_2.

When the cooking stage is the steady heating stage, the third cooking time t_3 may be preferably 5min, and the third cooking temperature T_3 may be preferably 215°C. In this way, the microwave module is controlled to operate in the whole process with the third microwave heating power of 1000W, and the air frying module coupled to the microwave module is controlled to operate with the third air frying heating power of 800W. Further, the microwave module and the air frying module are controlled to continuously operate for the third cooking time t_3 through the selected third microwave power P5 and the third air frying power P6, respectively, to maintain the cavity temperature of the cooking device at the third cooking temperature T_3.

When the cooking stage is the crusting and coloring stage, the fourth cooking time t_4 may be preferably 7min, and the fourth cooking temperature T_4 may be preferably 230°C. In this way, the microwave module is controlled to operate in the whole process with the fourth microwave heating power of 200W, and the air frying module coupled to the microwave module is controlled to operate with the fourth air frying heating power of 1600W. Further, the microwave module and the air frying module are controlled to continuously operate for the fourth cooking time t_4 through the selected fourth microwave power P7 and the fourth air frying power P8, respectively, to maintain the cavity temperature of the cooking device at the fourth cooking temperature T_4.

It should be noted that, in the above embodiments, in a case of having a same effect of cooking potato chips, total cooking time used by applying the method according to the above embodiments of the present disclosure is 18min, and a majority of nutrient substances is preserved. However, total cooking time used by a cooking method for a traditional air fryer is 28min, with a great loss of nutrient substances. Further, through the control method for the cooking device in the present disclosure, it can be ensured that most nutrient substances in meat and frozen ready-made foods are preserved while achieving an optimal cooking effect. Moreover, the cooking time is effectively shortened.

In conclusion, according to the control method for the cooking device provided by the embodiments of the present disclosure, the at least either the microwave module or the air frying module is controlled according to the cooking parameter and the cooking stage. Further, it can be ensured that most nutrient substances in meat and frozen ready-made foods are preserved while achieving the optimal cooking effect. Moreover, the cooking time is effectively shortened.

Based on the control method for the cooking device according to the foregoing embodiments of the present disclosure, the embodiments of the present disclosure further provide a computer-readable storage medium, which has a control program for a cooking device stored thereon. The control program for the cooking device, when executed by a processor, implements the control method for the cooking device according to the above embodiments of the present disclosure.

With the computer-readable storage medium according to the above embodiments of the present disclosure, the processor executes the control program for the cooking device stored thereon. Therefore, it can be ensured that most nutrient substances in meat and frozen ready-made foods are preserved while achieving the optimal cooking effect. Moreover, the cooking time is effectively shortened.

FIG. 10 is a block diagram of a cooking device according to another embodiment of the present disclosure.

Further, as illustrated in FIG. 10, based on the foregoing control method for the cooking device according to the embodiments of the present disclosure, the embodiments of the present disclosure further provide a cooking device 1000, which comprises a memory 1001, a processor 1002, and a control program for a cooking device stored on the memory 1001 and executable on the processor 1002. The processor, when executing the control program, implements the control method for the cooking device according to the embodiments of the present disclosure as described above.

According to the cooking device in the embodiments of the present disclosure, the processor executes the control program for the cooking device stored on the memory. Therefore, it can be ensured that most nutrient substances in meat and frozen ready-made foods are preserved while achieving the optimal cooking effect. Moreover, the cooking time is effectively shortened.

FIG. 11 is a block diagram of a control apparatus for a cooking device according to an embodiment of the present disclosure.

As illustrated in FIG. 11, the control apparatus 300 for the cooking device comprises an obtaining module 10, a determining module 20, and a control module 30.

Here, the obtaining module 10 is configured to obtain a characteristic parameter of a food material and a cooking stage of the cooking device. The determining module 20 is configured to determine a cooking parameter of the cooking device according to the characteristic parameter of the food material. The control module 30 is configured to control at least either the microwave module or the air frying module according to the cooking parameter and the cooking stage.

In some embodiments of the present disclosure, the characteristic parameter of the food material comprises a type and a weight of the food material, the cooking parameter comprises a predetermined cooking temperature, total cooking time, and total cooking power, and the cooking stage comprises a preheating stage, a slow temperature increasing stage, a rapid temperature increasing stage, a steady heating stage, and a crusting and coloring stage.

In some embodiments of the present disclosure, the control module 30 is specifically configured to: determine that a cooking temperature at the preheating stage is the predetermined cooking temperature in response to the cooking stage being the preheating stage; and control the air frying module to preheat the cooking device, such that a cavity temperature of the cooking device reaches the predetermined cooking temperature.

In some embodiments of the present disclosure, the control module 30 is specifically configured to: determine that a cooking temperature at the slow temperature increasing stage is a first cooking temperature in response to the cooking stage being the slow temperature increasing stage, the first cooking temperature being smaller than or equal to the predetermined cooking temperature; allocate first microwave heating power and first air frying heating power to the microwave module and the air frying module according to the total cooking power; and control the microwave module and the air frying module to continuously operate for first cooking time according to the first microwave power and the first air frying power, respectively, to maintain a cavity temperature of the cooking device at the first cooking temperature. The first cooking time is in a range of [10%t, 20%t], where t is the total cooking time.

In some embodiments of the present disclosure, the control module 30 is specifically configured to: determine that a cooking temperature at the rapid temperature increasing stage is a second cooking temperature in response to the cooking stage being the rapid temperature increasing stage, the second cooking temperature being greater than or equal to the predetermined cooking temperature and smaller than or equal to a sum of the predetermined cooking temperature and a first temperature threshold; allocate second microwave heating power and second air frying heating power to the microwave module and the air frying module according to the total cooking power; and control the microwave module and the air frying module to continuously operate for second cooking time according to the second microwave power and the second air frying power, respectively, to maintain a cavity temperature of the cooking device at the second cooking temperature. The second cooking time is in a range of [15%t, 25%t], where t is the total cooking time.

In some embodiments of the present disclosure, the control module 30 is specifically configured to: determine that a cooking temperature at the steady heating stage is a third cooking temperature in response to the cooking stage being the steady heating stage, the third cooking temperature being greater than or equal to the predetermined cooking temperature and smaller than or equal to a sum of the predetermined cooking temperature and a second temperature threshold; allocate third microwave heating power and third air frying heating power to the microwave module and the air frying module according to the total cooking power; and control the microwave module and the air frying module to continuously operate for third cooking time according to the third microwave power and the third air frying power, respectively, to maintain a cavity temperature of the cooking device at the third cooking temperature. The third cooking time is in a range of [25%t, 40%t], where t is the total cooking time.

In some embodiments of the present disclosure, the control module 30 is specifically configured to: determine that a cooking temperature at the crusting and coloring stage is a fourth cooking temperature in response to the cooking stage being the crusting and coloring stage, the fourth cooking temperature being greater than or equal to the predetermined cooking temperature and smaller than or equal to a sum of the predetermined cooking temperature and a third temperature threshold; allocate fourth microwave heating power and fourth air frying heating power to the microwave module and the air frying module according to the total cooking power; and control the microwave module and the air frying module to continuously operate for fourth cooking time according to the fourth microwave power and the fourth air frying power, respectively, to maintain a cavity temperature of the cooking device at the fourth cooking temperature. The fourth cooking time is in a range of [30%t, 50%t], where t is the total cooking time.

In some embodiments of the present disclosure, the predetermined cooking temperature and the total cooking power are each determined based on the type of the food material, the predetermined cooking temperature is in a range of [140°C, 250°C], and the total cooking power is in a range of [1200W, 1800W]; and the total cooking time is determined based on the weight of the food material, and the total cooking time is in a range of [15min, 40min].

It should be noted that other specific implementations of the control apparatus for the cooking device provided according to the embodiments of the present disclosure may refer to specific implementations of the control method for the cooking device according to the above embodiments of the present disclosure, and are omitted here for reducing redundancy.

In conclusion, according to the control apparatus for the cooking device provided by the embodiments of the present disclosure, the at least either the microwave module or the air frying module is controlled by the control module according to the cooking parameter and the cooking stage. Therefore, it can be ensured that most nutrient substances in meat and frozen ready-made foods are preserved while achieving the optimal cooking effect. Moreover, the cooking time is effectively shortened.

In addition, other compositions and functions of the cooking device according to the embodiments of the present disclosure are known to those skilled in the art, and are omitted here for reducing redundancy.

## Claims

1. A control method for a cooking device, the cooking device comprising a microwave module and an air frying module, the method comprising:
obtaining a characteristic parameter of a food material and a cooking stage of the cooking device;
determining a cooking parameter of the cooking device according to the characteristic parameter of the food material; and
controlling at least either the microwave module or the air frying module according to the cooking parameter and the cooking stage, to improve a cooking speed of the food material.

2. The control method according to claim 1, wherein the characteristic parameter of the food material comprises a type and weight of the food material, the cooking parameter comprises a predetermined cooking temperature, total cooking time, and total cooking power, and the cooking stage comprises a preheating stage, a slow temperature increasing stage, a rapid temperature increasing stage, a steady heating stage, and a crusting and coloring stage.

3. The control method according to claim 2, wherein said controlling at least either the microwave module or the air frying module according to the cooking parameter and the cooking stage comprises:
determining that a cooking temperature at the preheating stage is the predetermined cooking temperature in response to the cooking stage being the preheating stage; and
controlling the air frying module to preheat the cooking device, such that a cavity temperature of the cooking device reaches the predetermined cooking temperature.

4. The control method according to claim 2, wherein said controlling at least either the microwave module or the air frying module according to the cooking parameter and the cooking stage comprises:
determining that a cooking temperature at the slow temperature increasing stage is a first cooking temperature in response to the cooking stage being the slow temperature increasing stage, the first cooking temperature being smaller than or equal to the predetermined cooking temperature;
allocating first microwave heating power and first air frying heating power to the microwave module and the air frying module according to the total cooking power; and
controlling the microwave module and the air frying module to continuously operate for first cooking time according to the first microwave power and the first air frying power, respectively, so as to maintain a cavity temperature of the cooking device at the first cooking temperature, the first cooking time being in a range of [10%t, 20%t], where t is the total cooking time.

5. The control method according to claim 2, wherein said controlling at least either the microwave module or the air frying module according to the cooking parameter and the cooking stage comprises:
determining that a cooking temperature at the rapid temperature increasing stage is a second cooking temperature in response to the cooking stage being the rapid temperature increasing stage, the second cooking temperature being greater than or equal to the predetermined cooking temperature and smaller than or equal to a sum of the predetermined cooking temperature and a first temperature threshold;
allocating second microwave heating power and second air frying heating power to the microwave module and the air frying module according to the total cooking power; and
controlling the microwave module and the air frying module to continuously operate for second cooking time according to the second microwave power and the second air frying power, respectively, to maintain a cavity temperature of the cooking device at the second cooking temperature, wherein the second cooking time being in a range of [15%t, 25%t], where t is the total cooking time.

6. The control method according to claim 2, wherein said controlling at least either the microwave module or the air frying module according to the cooking parameter and the cooking stage comprises:
determining that a cooking temperature at the steady heating stage is a third cooking temperature in response to the cooking stage being the steady heating stage, the third cooking temperature being greater than or equal to the predetermined cooking temperature and smaller than or equal to a sum of the predetermined cooking temperature and a second temperature threshold;
allocating third microwave heating power and third air frying heating power to the microwave module and the air frying module according to the total cooking power; and
controlling the microwave module and the air frying module to continuously operate for third cooking time according to the third microwave power and the third air frying power, respectively, to maintain a cavity temperature of the cooking device at the third cooking temperature, the third cooking time being in a range of [25%t, 40%t], where t is the total cooking time.

7. The control method according to claim 2, wherein said controlling at least either the microwave module or the air frying module according to the cooking parameter and the cooking stage comprises:
determining that a cooking temperature at the crusting and coloring stage is a fourth cooking temperature in response to the cooking stage being the crusting and coloring stage, the fourth cooking temperature being greater than or equal to the predetermined cooking temperature and smaller than or equal to a sum of the predetermined cooking temperature and a third temperature threshold;
allocating fourth microwave heating power and fourth air frying heating power to the microwave module and the air frying module according to the total cooking power; and
controlling the microwave module and the air frying module to continuously operate for fourth cooking time according to the fourth microwave power and the fourth air frying power, respectively, to maintain a cavity temperature of the cooking device at the fourth cooking temperature, the fourth cooking time being in a range of [30%t, 50%t], where t is the total cooking time.

8. The control method according to any one of claims 2 to 7, wherein:
the predetermined cooking temperature and the total cooking power are each determined based on the type of the food material, the predetermined cooking temperature is in a range of [140°C, 250°C], and the total cooking power is in a range of [1200W, 1800W]; and
the total cooking time is determined based on the weight of the food material, and the total cooking time is in a range of [15min, 40min].

9. A computer-readable storage medium, having a control program for a cooking device stored thereon, wherein the control program for the cooking device, when executed by a processor, implements a control method for the cooking device according to any one of claims 1 to 8.

10. A cooking device, comprising:
a memory;
a processor; and
a control program for the cooking device stored on the memory and executable on the processor, wherein the processor, when executing the control program, implements a control method for the cooking device according to any one of claims 1 to 8.

11. A control apparatus for a cooking device, the cooking device comprising a microwave module and an air frying module, the apparatus comprising:
an obtaining module configured to obtain a characteristic parameter of a food material and a cooking stage of the cooking device;
a determining module configured to determine a cooking parameter of the cooking device according to the characteristic parameter of the food material; and
a control module configured to control at least either the microwave module (100) or the air frying module according to the cooking parameter and the cooking stage, to improve a cooking speed of the food material.
